# EUROPÄISCHE PATENTSCHRIFT

(11) **EP 3 488 119 B1**
(45) Veröffentlichungstag und Bekanntmachung des Hinweises auf die Patenterteilung: **08.07.2020**
(21) Anmeldenummer: 17751280.3
(22) Anmeldetag: 21.07.2017
(51) Int. Cl.: F16D 65/56, F16D 65/18

(54) **SCHEIBENBREMSE UND BREMSBETÄTIGUNGSMECHANISMUS**
DISK BRAKE AND BRAKE ACTUATION MECHANISM
FREIN À DISQUE ET MÉCANISME DE COMMANDE DE FREIN

(30) Priorität: 22.07.2016 DE 102016008769
(43) Veröffentlichungstag der Anmeldung: 29.05.2019
(73) Patentinhaber: Haldex Brake Products AB, 261 24 Landskrona (SE)
(72) Erfinder: SANDBERG, Stefan, 23435 Lomma (SE)
(74) Vertreter: Habermann, Hruschka & Schnabel
(86) Internationale Anmeldenummer: PCT/EP2017/068557
(87) Internationale Veröffentlichungsnummer: WO 2018/015565

(56) Entgegenhaltungen:
- WO-A2-2011/113554
- WO-A2-2015/140225
- DE-A1- 2 143 840
- DE-A1- 3 445 563
- GB-A- 2 063 401

## Beschreibung

Die vorliegende Erfindung betrifft einen Bremsbetätigungsmechanismus für eine Scheibenbremse sowie eine Scheibenbremse, insbesondere für Nutzfahrzeuge, die einen solchen Bremsbetätigungsmechanismus aufweist.

Hierbei sind von der Erfindung Scheibenbremsen umfasst, die entweder einen Gleitsattel oder einen Festsattel aufweisen, und die eine oder mehrere Bremsscheiben übergreifen. Die Erfindung bezieht sich hauptsächlich, aber nicht ausschließlich, auf Teilbelag-Scheibenbremsen.

Scheibenbremsen, insbesondere für Schwerlastkraftwagen, sind in den unterschiedlichsten Ausführungsformen bekannt, sowohl was die Art des Bremsbetätigungsmechanismus, die Art und Weise der Übertragung der Bremskraft auf eine oder mehrere Bremsscheiben als auch die Art der Nachstellung zum Ausgleich eines Verschleißes der Bremsbeläge angeht.

Eine spezielle Ausführungsform einer Bremsbetätigungsvorrichtung, die in Scheibenbremsen zum Einsatz kommt, ist beispielsweise aus der Internationalen Anmeldung WO 2011/113554 A2 der Anmelderin bekannt. Der aus dieser Anmeldung bekannte Bremsbetätigungsmechanismus zeichnet sich durch einen äußerst kompakten Aufbau aus, der mit einem geringeren Raumbedarf in dem Gehäuse des Bremssattels und mit einem geringeren Gewicht einhergeht. Sämtliche Komponenten dieses Bremsbetätigungsmechanismus sind mittels eines in dem Gehäuse des Bremssattels in Axialrichtung gelagerten Stabs funktional zusammenwirkend in dem Bremssattel so montiert, dass diese parallel zu der Rotationsachse der Bremsscheibe wirken. Infolge einer Verlagerungsbewegung des Verstärkungsmechanismus führt ein Druckelement zusammen mit einer Nachstelleinrichtung eine Translationsbewegung in Richtung auf die Bremsscheibe aus, um die Zuspannkraft zu übertragen.

Die Nachstelleinrichtung für den Ausgleich des Verschleißes weist eine Momentenkupplung auf, die drehmomentgesteuert ist und der selektiven Übertragung einer drehrichtungsabhängigen Rotation zwischen Bauteilen der Momentenkupplung dient. Darüber hinaus weist die Nachstelleinrichtung noch eine Einwegkupplung auf, bei der zwei auf dem Stab drehbar gelagerte Elemente, eine innere Aufnahmehülse und eine Hohlwelle mittels einer Freilauffeder miteinander verbunden sind, wobei die Einwegkupplung dabei so konzipiert ist, dass diese während einer Bremsbetätigung eine Drehbewegung zwischen den beiden Elementen überträgt, während diese bei Bremsfreigabe durchrutscht.

Zur genauen Funktionsweise hinsichtlich Zustellung und Übertragung der Bremskraft sowie der Nachstellbewegung bei dem aus dem Stand der Technik bekannten Bremsbetätigungsmechanismus wird hiermit ausdrücklich auf den Offenbarungsgehalt der WO 2011/113554 A2 verwiesen. Weitere, ähnlich konzipierte Bremsbetätigungsmechanismen sind beispielsweise aus der WO 2013/083857 A2, der WO 2014/106672 A2 oder der WO 2015/140225 A2 der Anmelderin bekannt, auf die hiermit ebenfalls ausdrücklich Bezug genommen wird.

Den oben genannten Bremsbetätigungsmechanismen aus dem Stand der Technik ist gemeinsam, dass eine Hohlwelle, die auf dem Stab drehbar gelagert ist, als Eingangselement für die Nachstelleinrichtung dient und durch den Hebel des Verstärkungsmechanismus unmittelbar in Drehung versetzt wird. Hierzu ist an der Hohlwelle an einer geeigneten Stelle ein Zapfen oder ähnliches Element vorgesehen, wobei der Zapfen radial von der Hohlwelle absteht und von einer Ausnehmung in dem Hebel, im Bereich seiner Schwenklagerfläche, mit einem definierten Spiel aufgenommen ist. Hierdurch kann die Hohlwelle durch eine Schwenkbewegung des Hebels in Drehung versetzt werden, die dann in die Nachstelleinrichtung eingeleitet wird.

Bei häufigen Bremsbetätigungen, wie sie beispielsweise bei Bussen im öffentlichen Nahverkehr auftreten können, ist die Verbindung aus Zapfen und Ausnehmung allerdings unter Umständen einem erhöhten Verschleiß ausgesetzt, was aus Gründen der Funktionssicherheit und der Lebensdauer jedoch unerwünscht ist.

Ausgehend davon stellt sich die Erfindung die Aufgabe, einen Bremsbetätigungsmechanismus bereitzustellen, der in dieser Hinsicht eine größere Funktionssicherheit bei einem gleichzeitig kompakten Aufbau bietet. Eine weitere, übergeordnete Aufgabe besteht darin, einen Bremsbetätigungsmechanismus für eine Scheibenbremse, insbesondere für Nutzfahrzeuge, bereitzustellen, bei der die Nachstelleinrichtung, was deren Betätigung betrifft, einem geringeren Verschleiß ausgesetzt ist. Darüber hinaus besteht eine Aufgabe darin, eine Scheibenbremse zur Verfügung zu stellen, bei der derartige Bremsbetätigungsmechanismen zur Anwendung kommen.

Gelöst werden diese Aufgaben mit einem Bremsbetätigungsmechanismus nach Anspruch 1 und mit einer einen solchen Bremsbetätigungsmechanismus aufweisenden Scheibenbremse nach Anspruch 30.

Allgemein, im Prinzip unabhängig von der konkreten Ausgestaltung des Bremsbetätigungsmechanismus und der darin implementierten Nachstelleinrichtung, liegt der Kern der vorliegenden Erfindung darin, einen Bremsbetätigungsmechanismus für eine Scheibenbremse bereitzustellen, der aufweist:
- einen Verstärkungsmechanismus zur Einleitung einer Zuspannkraft für den Bremsvorgang,
- ein Druckelement zur Übertragung der Zuspannkraft auf eine Bremsscheibe,
   wobei der Verstärkungsmechanismus und das Druckelement so zusammenwirken, dass das Druckelement durch eine Verlagerungsbewegung des Verstärkungsmechanismus eine Translationsbewegung in Richtung auf die Bremsscheibe ausführt,
- und eine Nachstelleinrichtung zum Ausgleich eines Belagverschleißes,
   wobei ein Eingangselement der Nachstelleinrichtung durch diese Translationsbewegung in Drehung versetzbar ist,
   und wobei das Eingangselement der Nachstelleinrichtung als Teil eines Kugelgewindetriebs ausgebildet ist.

Hierbei kann das Eingangselement der Nachstelleinrichtung als Spindel oder als Mutter eines Kugelgewindetriebs ausgebildet sein.

Der Vorteil in der Verwendung eines Kugelgewindetriebs liegt darin, dass einem solchen Mechanismus grundsätzlich weniger Reibung innewohnt, einhergehend mit einem geringeren Verschleiß. Die hierdurch erforderliche geringere Antriebsleistung bei gleichzeitig möglichen höheren Bewegungsgeschwindigkeiten erweist sich für Nachstelleinrichtungen als besonders vorteilhaft, da sie bei einem geringeren Kraftaufwand eine positionsgenauere Einstellung beim Ausgleich des verschleißbedingten Lüftspiels gestatten.

Da der Kugelgewindetrieb eine Translationsbewegung in eine Drehung umsetzt, kann gemäß der Erfindung die auf die Bremsscheibe vorwärts gerichtete Bewegung des Druckelements genutzt werden, um im Kugelgewindetrieb eine Drehung hervorzurufen. Hierbei ist die geringe innere Reibung eines Kugelgewindetriebs von Vorteil, da bereits die Beaufschlagung eines der Elemente, Spindel oder Mutter, das als Eingangselement für die Nachstelleinrichtung genutzt wird, mit einer linearen Druckkraft zu einer Drehung des jeweils anderen Elements, Mutter oder Spindel, führt, je nachdem, welches der Elemente verdrehsicher innerhalb der Nachstelleinrichtung angeordnet ist.

Hierdurch wird es gemäß der Erfindung möglich, den Verstärkungsmechanismus, bzw. die Komponenten des Verstärkungsmechanismus, die auf die Nachstelleinrichtung, bzw. auf das Eingangselement davon, bei Bremsbetätigung und ggfs. bei Bremsfreigabe einwirken, mechanisch zu entkoppeln. Mangels direkter mechanischer Verbindung über Kopplungselemente, wie beispielsweise Zapfen und Ausnehmung beim Stand der Technik, ist ein solcher Bremsbetätigungsmechanismus einem geringeren Verschleiß ausgesetzt und zeigt eine längere Lebensdauer.

Zur Realisierung eines darüber hinaus kompakteren Aufbaus des Bremsbetätigungsmechanismus kann es gemäß der Erfindung vorgesehen sein, dass das Eingangselement des Kugelgewindetriebs, entweder die Spindel oder die Mutter, mittelbar oder unmittelbar mit einer Momentenkupplung der Nachstelleinrichtung zusammenwirkt.

Die Erfindung richtet sich, jedoch nicht ausschließlich, an Bremsbetätigungsmechanismen in den aus dem oben geschilderten Stand der Technik bekannten Ausgestaltungen.

Demzufolge betrifft die Erfindung in einer bevorzugten Ausführungsform einen Bremsbetätigungsmechanismus, bei dem der Verstärkungsmechanismus, das Druckelement und die Nachstelleinrichtung mittels eines in einem Gehäuse eines Bremssattels der Scheibenbremse in Axialrichtung unbeweglich und nicht drehbar gelagerten Stabs funktional zusammenwirkend in dem Bremssattel montierbar sind,
wobei das Eingangselement der Nachstelleinrichtung als eine auf dem Stab drehbar gelagerte Hohlspindel eines Kugelgewindetriebs ausgebildet ist.

Die Hohlspindel kann auf dem Stab über zumindest ein Lagerelement, bspw. einen Gleitlagerring, drehbar gelagert sein.

Radial die Hohlspindel zumindest über einen Abschnitt davon umgebend ist unter Zwischenlagerung von Kugeln oder Kugelreihen eine Mutter des Kugelgewindetriebs vorgesehen. Die Mutter ist dabei vorzugsweise im bremsscheibenabgewandten Bereich der Nachstelleinrichtung so angeordnet, dass sie von dem Verstärkungsmechanismus, mittelbar oder unmittelbar, axial mit Druck beaufschlagt werden kann. Auf diese Weise wird die von dem Verstärkungsmechanismus in das Druckelement und letztendlich auch in die Nachstelleinrichtung induzierte Translationsbewegung in eine Rotationsbewegung der Hohlspindel überführt, die, wie nachfolgend noch erläutert wird, der Nachstellung eines verschleißbedingten Lüftspiels dient.

Der Verstärkungsmechanismus kann einen Hebel aufweisen, der in einem Lagersitzkörper schwenkbar gelagert ist. Die Mutter des Kugelgewindetriebs steht mit dem Lagersitzkörper in einer verdrehsicheren Verbindung und kann demzufolge selbst, zusammen mit dem Lagersitzkörper, nur eine Translationsbewegung vollführen. Die verdrehsichere Verbindung kann beispielsweise vorteilhaft dadurch realisiert werden, dass die Mutter stirnseitig Vorsprünge aufweist, die in entsprechend formkomplementäre Ausnehmungen im Lagersitzkörper unter Ausbildung einer Zapfen-Nut-Verbindung eingreifen.

Das erfindungsgemäße Prinzip in Bezug auf diese Ausführungsform liegt darin, dass der Kugelgewindetrieb innerhalb der im Wesentlichen rotationssymmetrisch um den Stab aufgebauten Nachstelleinrichtung integriert ist. Während bei den vorhergehend geschilderten Bremsbetätigungsmechanismen aus dem Stand der Technik die Hohlspindel mit dem Hebel durch eine mechanische Verbindung mittels eines Zapfens der Hohlspindel, der unter einem definierten Spiel in eine Ausnehmung im Hebelkörper eingreift, verbunden ist, besteht bei der hier geschilderten bevorzugten Ausführungsform des Bremsbetätigungsmechanismus gemäß der Erfindung kein direkter kraftübertragender Kontakt zwischen der Hohlspindel und dem Hebel.

Durch die Verwendung eines Kugelgewindetriebs, bei der die Hohlspindel der Nachstelleinrichtung das Abtriebselement des Kugelgewindetriebs bildet, genügt daher bereits die reine, vorwärts auf die Bremsscheibe gerichtete Translationsbewegung des Lagersitzkörpers und der damit verdrehsicher verbundenen Mutter, die das Antriebselement des Kugelgewindetriebs bildet, um die Hohlspindel in eine Rotationsbewegung zu versetzen und damit die Nachstelleinrichtung zu aktivieren, wobei sich die Translationsbewegung aus der Schwenk- bzw. Verlagerungsbewegung des Hebels und der im Wesentlichen linearen Führung des Druckelements in einem Gehäuse eines Bremssattels der Scheibenbremse ergibt.

In einer Ausführungsform weist die Hohlspindel des Kugelgewindetriebs einen Gewindeabschnitt, der über Kugeln mit der Mutter des Kugelgewindetriebs in einer drehbaren Verbindung steht, und einen Zylinderabschnitt auf. Der Zylinderabschnitt wiederum stützt sich stirnseitig an einem Widerlagerring unter einer Drehlagerung ab, um die über die Hohlspindel geleiteten Axialkräfte aufzunehmen. Das hierfür zum Einsatz kommende Drehlager kann entsprechend friktionsarm ausgestaltet sein.

Des Weiteren steht der Zylinderabschnitt mit einer diesen Zylinderabschnitt radial umgebenden Kupplungshülse in einer drehfesten Verbindung. Diese drehfeste Verbindung kann vorzugsweise über eine entsprechend gewählte Presspassung realisiert sein, so dass sich die Hohlspindel und die Kupplungshülse gemeinsam drehen.

Zwischen der Mutter des Kugelgewindetriebs und der Kupplungshülse ist eine Feder angeordnet, die sich über einen definierten axialen Abstand erstreckt und so die Mutter in einem sicheren Eingriff mit dem Lagersitzkörper hält.

Die Kupplungshülse selbst ist mit einer Radiallagernabe über eine erste Freilauffeder unter Ausbildung einer ersten Momentenkupplung gekoppelt. Die Radiallagernabe schließt sich axial an die Kupplungshülse an, wobei beide Komponenten die erste Freilauffeder radial innenseitig einschließen und die erste Freilauffeder zu dem Zylinderabschnitt der Hohlspindel einen radialen Abstand einhält.

Die Radiallagernabe steht über ein Radialkugellager mit einer in Bezug auf die Bremsscheibe gesehen vorderen Momentenhülse in einer drehfesten, aber axial verschiebbaren Verbindung. Die vordere Momentenhülse ist dabei so ausgebildet, dass sie unter Beibehaltung eines gewissen radialen Abstands die Kupplungshülse und teilweise die Mutter sowie die zwischen diesen angeordnete Feder umgibt.

Die vordere Momentenhülse ist mit einer hinteren Momentenhülse über eine zweite Freilauffeder unter Ausbildung einer zweiten Momentenkupplung gekoppelt, wobei die zweite Freilauffeder die vordere Momentenhülse und die hintere Momentenhülse radial außenseitig einschließt.

Die hintere Momentenhülse wiederum steht mit einer die Momentenhülse radial umgebenden Nachstellspindel der Nachstelleinrichtung in einer drehfesten Verbindung, die mit einem drehfest in dem Gehäuse des Bremssattels gelagerten hülsen- bzw. topfartigen Druckstück des Druckelements in einem Gewindeeingriff steht.

Die hintere Momentenhülse ist an dem Lagersitzkörper über ein vorzugsweise friktionsarmes Lagerelement drehbar gelagert. Da darüber hinaus die Nachstellspindel an ihrem stirnseitigen, bremsscheibenabgewandten Ende mit dem Lagersitzkörper unmittelbar in Kontakt steht, läuft bei Bremsbestätigung der Hauptkraftfluss der von dem Hebel eingeleiteten Zuspannkraft von dem Lagersitzkörper des Hebels unmittelbar über die Nachstellspindel und über den Gewindeeingriff in das Druckstück und damit über einen mit diesen in Verbindung stehenden Bremsbelag auf die Bremsscheibe. Die Nachstelleinrichtung ist dadurch im Wesentlichen von der Zuspannkraft entkoppelt.

Die Radiallagernabe ist mit dem zur Bremsscheibe hin auf dem Stab angeordneten Widerlagerring über eine dritte Freilauffeder unter Ausbildung einer dritten Momentenkupplung gekoppelt, wobei die dritte Freilauffeder die Radiallagernabe und den Widerlagerring radial außenseitig einschließt.

An der vorderen Momentenhülse greift eine Rückstellfeder einer Rückstelleinrichtung an, wobei zwischen der Rückstellfeder und der vorderen Momentenhülse ein Haltering vorgesehen ist und die vordere Momentenhülse über einen Gleitlagerring an dem Haltering drehbar gelagert ist. An der dem Haltering gegenüberliegenden Seite stützt sich die Rückstellfeder an einer Widerlagerschale ab, wobei sich die Rückstellfeder zwischen der Widerlagerschale und dem Haltering über einen definierten axialen Abstand erstreckt. Die Widerlagerschale ist zwischen dem Widerlagerring und einer Befestigungsmutter eingespannt, die auf dem bremsscheibenseitigen Ende des Stabes befestigbar ist, wobei die Widerlagerschale die Nachstellspindel bremsscheibenseitig nach vorne abschließt und damit die im Inneren der Nachstellspindel vollständig aufgenommene Nachstelleinrichtung sowie die durch die Rückstellfeder gebildete Rückstelleinrichtung schützend abdichtet.

Die axialen Abmessungen des Verstärkungsmechanismus, der Nachstelleinrichtung, des Druckelements und der Rückstelleinrichtung im Verhältnis zu deren Anordnung auf dem Stab und im Verhältnis zu der durch diesen definierten Einbaulage im Bremssattel können dabei so konzipiert sein, dass die Rückstellfeder auf die zweite Momentenkupplung eine definierte Federkraft unter Bereitstellung einer definierten Drehmomentbegrenzung ausüben.

Zur Realisierung eines sehr kompakten Aufbaus ist es gemäß der Erfindung vorgesehen, dass sich die erste Freilauffeder der ersten Momentenkupplung und die zweite Freilauffeder der zweiten Momentenkupplung sowie die erste Freilauffeder der ersten Momentenkupplung und die dritte Freilauffeder der dritten Momentenkupplung in Axialrichtung abschnittsweise überlappen.

Ein weiterer Vorteil des Bremsbetätigungsmechanismus gemäß der Erfindung liegt darin, dass sich der Kugelgewindetrieb der Nachstelleinrichtung im Hinblick auf das gewünschte Nachstellverhalten, unter Berücksichtigung der weiteren Ausgestaltung der Nachstelleinrichtung und des Bremsbetätigungsmechanismus, insgesamt individuell konfigurieren und abstimmen lässt, wobei in konstruktiver Hinsicht gezielt auf die Art des zum Einsatz kommenden Gewindes, wie bspw. auf Art der Rillen und Kugeln, die Art der Gewindegänge usw. Einfluss genommen wird.

So kann es gemäß der Erfindung vorgesehen sein, dass zwischen der Mutter und dem Gewindeabschnitt des Kugelgewindetriebs Kugeln oder Kugelkäfige in einer Reihe oder mehreren Reihen angeordnet sind.

Auch ist es möglich, die Anzahl, die Steigungswinkel und/oder die Umfangserstreckung der Rillen der Mutter und/oder der Rillen des Gewindeabschnitts unterschiedlich auszugestalten. Die Rillen der Mutter und/oder die Rillen des Gewindeabschnitts können eine variierende Steigung aufweisen.

Darüber hinaus kann es vorgesehen sein, dass mehrere Rillen angeordnet werden, die sich nur über einen Teilumfang erstrecken und teilweise überlappen. Die Rillen selbst können an ihren Enden mit die Umlaufbewegung der Kugeln begrenzenden Anschlägen versehen sein.

In einer bevorzugten Ausführungsform des Bremsbetätigungsmechanismus gemäß der Erfindung ist es vorgesehen, dass die Rillen der Mutter und die Rillen des Gewindeabschnitts derart ausgestaltet sind, dass eine erste Nachstellung bei geringen Drehgeschwindigkeiten der Hohlspindel und eine weitere, darüber hinausgehende Nachstellung bei höheren Drehgeschwindigkeiten der Hohlspindel durch die Nachstelleinrichtung bewerkstelligt wird.

Die Erfindung betrifft darüber hinaus auch eine Scheibenbremse, die einen Bremsbetätigungsmechanismus nach zumindest einem der oben geschilderten Ausgestaltungen aufweist. Insbesondere betrifft die Erfindung eine Scheibenbremse, bei der ein Bremsbetätigungsmechanismus nach zumindest einem der oben geschilderten Ausgestaltungen durch einen Stab in einem Gehäuse eines Bremssattels der Scheibenbremse zumindest modulweise oder insgesamt als eine selbsttragende Einheit montierbar ist.

Weitere Vorteile und Merkmale der Erfindung ergeben sich aus der nachfolgenden Beschreibung der anhand der Zeichnungen dargestellten Ausführungsbeispiele. Es zeigen
- Fig. 1: einen Längsschnitt in Axialrichtung eines Bremsbetätigungsmechanismus gemäß der Erfindung;
- Fig. 2a: eine Explosionsdarstellung des Bremsbetätigungsmechanismus in einer ersten Ansicht;
- Fig. 2b: eine Explosionsdarstellung des Bremsbetätigungsmechanismus in einer weiteren Ansicht;
- Fig. 3: den Längsschnitt aus Fig. 1 mit Angaben von Schnitten;
- Fig. 4a: einen Querschnitt entlang M - M aus Fig. 3;
- Fig. 4b: einen Querschnitt entlang N - N aus Fig. 3;
- Fig. 4c: einen Querschnitt entlang O - O aus Fig. 3;
- Fig. 5: den Längsschnitt aus Fig. 1 mit Angaben von weiteren Schnitten;
- Fig. 6a: einen Querschnitt entlang P - P aus Fig. 5;
- Fig. 6b: einen Querschnitt entlang Q - Q aus Fig. 5;
- Fig. 6c: einen Querschnitt entlang R - R aus Fig. 5;
- Fig. 7: einen Längsschnitt in Axialrichtung durch eine Nachstelleinrichtung und Rückstelleinrichtung gemäß der Erfindung;
- Fig. 8: eine Explosionsdarstellung der Nachstelleinrichtung und Rückstelleinrichtung aus Fig. 7;
- Fig. 9a: einen Längsschnitt in Axialrichtung durch einen Kugelgewindetrieb der Nachstelleinrichtung gemäß der Erfindung;
- Fig. 9b: eine Explosionsdarstellung des Kugelgewindetriebs aus Fig. 9a;

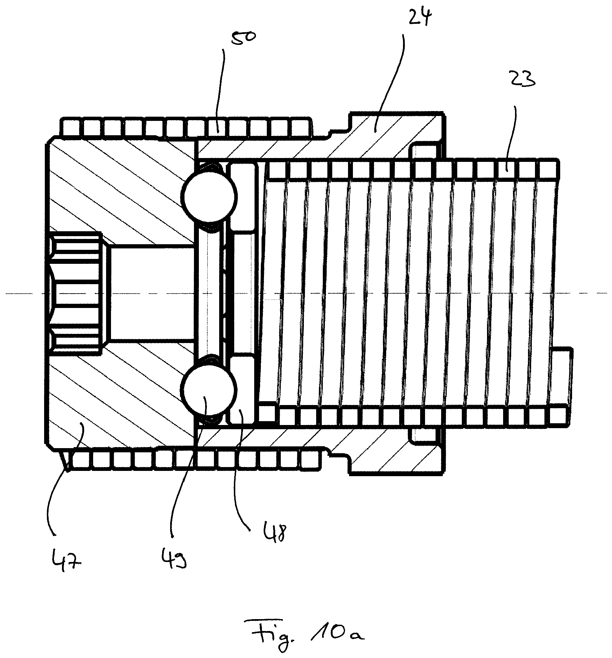

- Fig. 10a: einen Längsschnitt in Axialrichtung durch einen vorderen, bremsscheibenzugewandten Teil der Nachstelleinrichtung gemäß der Erfindung;

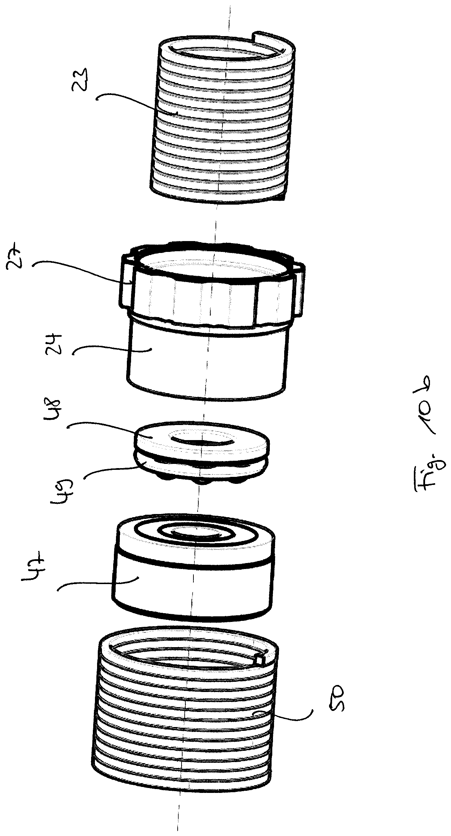

- Fig. 10b: eine Explosionsdarstellung dieses Teils aus Fig. 10a;
- Fig. 11a: einen Längsschnitt in Axialrichtung durch einen weiteren Teil der Nachstelleinrichtung gemäß der Erfindung;
- Fig. 11b: eine Explosionsdarstellung dieses Teils aus Fig. 11b; und
- Fig. 12: eine alternative Ausführungsform der Gewindestruktur des Kugelgewindetriebs gemäß der Erfindung.

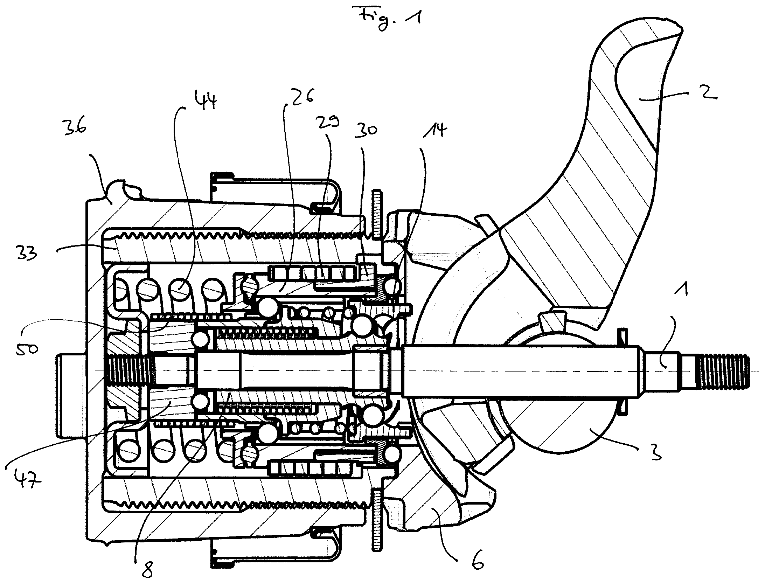

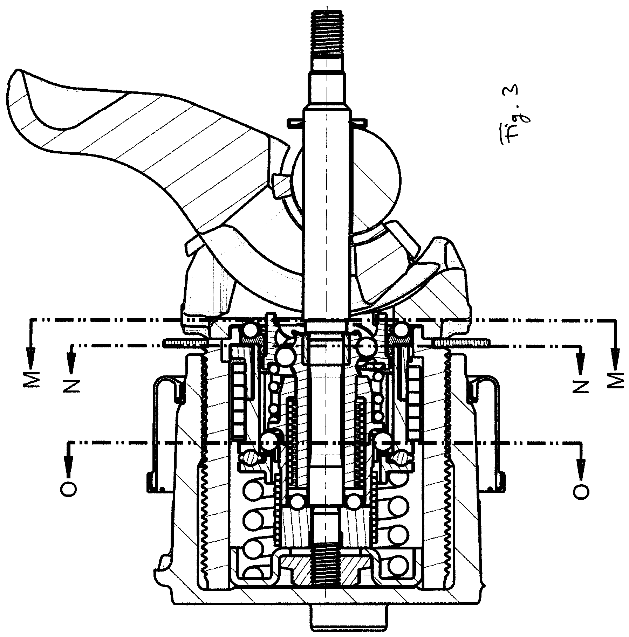

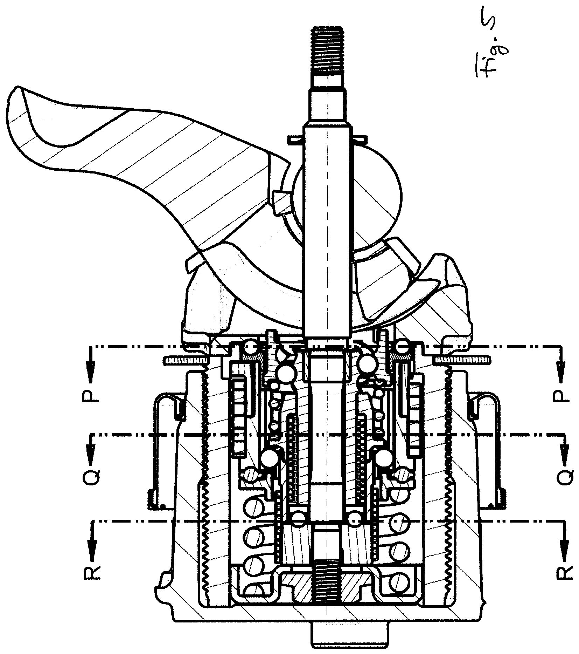

Die Figuren 1 bis 6 zeigen allgemein alle Komponenten eines Bremsbetätigungsmechanismus gemäß der Erfindung. Zur genauen Einbaulage eines solchen Bremsbetätigungsmechanismus gemäß der Erfindung in einem Gehäuse eines Bremssattels soll bspw. auf die WO 2011/113554 A2 der Anmelderin verwiesen werden, auf deren Offenbarungsgehalt hiermit ausdrücklich Bezug genommen wird.

Der Bremsbetätigungsmechanismus gemäß der Erfindung besteht im Wesentlichen aus vier Modulen, die funktional zusammenwirken, nämlich aus einem Verstärkungsmechanismus A, einer Nachstelleinrichtung B, einem Druckelement C und einer Rückstelleinrichtung D, wobei der Bremsbetätigungsmechanismus als eine selbsttragende Einheit mittels eines zentral angeordneten Stabs 1 auf diesem selbst und dadurch in einem Gehäuse des Bremssattels montierbar ist.

Der Verstärkungsmechanismus A dient dazu, eine Betätigungskraft von einem (hier nicht dargestellten) hydraulischen, pneumatischen oder elektro-mechanischen Aktuator als Zuspannkraft in den Bremsbetätigungsmechanismus einzuleiten und gemäß eines durch seine Konstruktion bedingten Übersetzungsverhältnisses zu verstärken. Ein Hebel 2 ist in einem rückseitigen Gehäuseabschnitt eines (hier ebenfalls nicht dargestellten) Bremssattels schwenkbar gelagert, indem dieser gegenüber einer Walze 3 drehbar angeordnet ist, wobei die Walze 3 im Verhältnis zu der Drehachse des Hebels 2 exzentrisch positioniert ist. Zwischen der Walze 3 und der entsprechenden Fläche des Hebels 2 sind Nadellager bzw. Nadellagerkäfige 4 vorgesehen.

An der der Walze 3 gegenüberliegenden Seite ist der Hebel 2 über entsprechende Nadellager bzw. Nadellagerkäfige 5 in entsprechenden Lagerflächen eines einstückigen Lagersitzkörpers 6 schwenkbar gelagert.

Der Verstärkungsmechanismus A ist so konzipiert, dass durch eine Drehung um die Walze 3 der Hebel 2 dieser gegenüber eine exzentrische Verlagerungsbewegung vollführt, die zu einer entsprechenden Verstärkung der am Hebel 2 angreifenden Betätigungskraft führt, die dann als Zuspannkraft über eine Translationsbewegung des Lagersitzkörpers 6, der hierfür in dem Gehäuse des Bremssattels linear geführt sein kann, auf die Nachstelleinrichtung B und das Druckelement C übertragen wird.

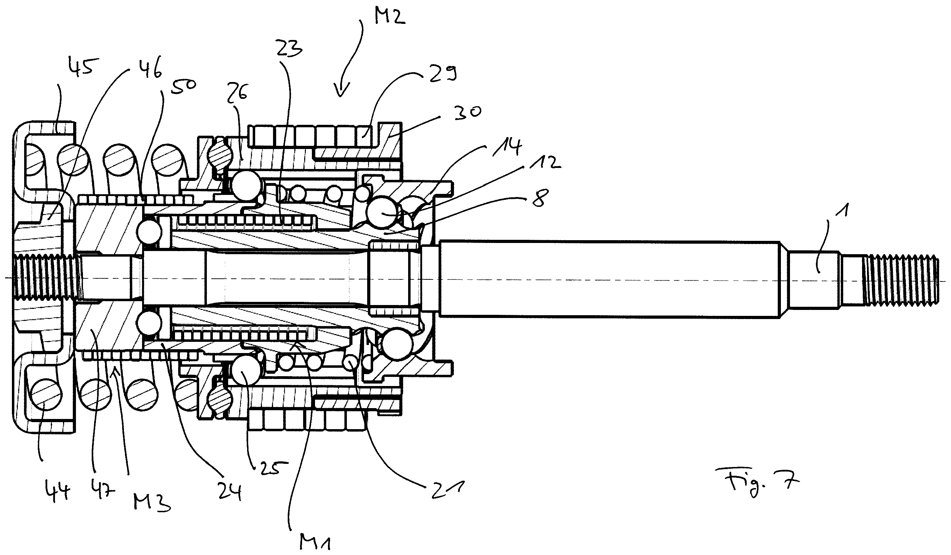

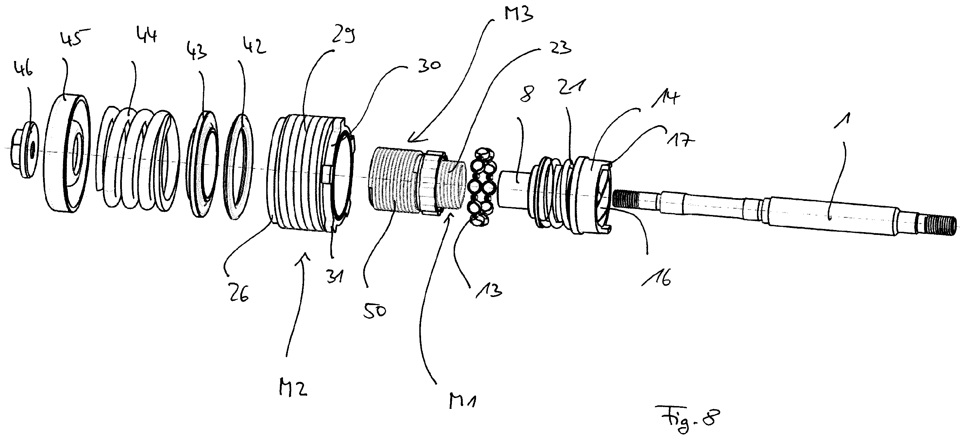

Die Nachstelleinrichtung B folgt in Axialrichtung in Bezug auf eine (hier nicht dargestellte) Bremsscheibe gesehen unmittelbar im Anschluss an den Lagersitzkörper 6 und weist einen Kugelgewindetrieb 7 auf, wie er am besten aus den Figuren 7 bis 9b zu ersehen ist.

Der Kugelgewindetrieb 7 weist eine Hohlspindel 8 auf, die u.a. über eine Gleitlagerbuchse 9 auf dem Stab 1 drehbar gelagert ist.

Die Hohlspindel 8 unterteilt sich in einen bremsscheibenabgewandten, dem Lagersitzkörper 6 zugewandten Gewindeabschnitt 10 und einen bremsscheibenzugewandten Zylinderabschnitt 11.

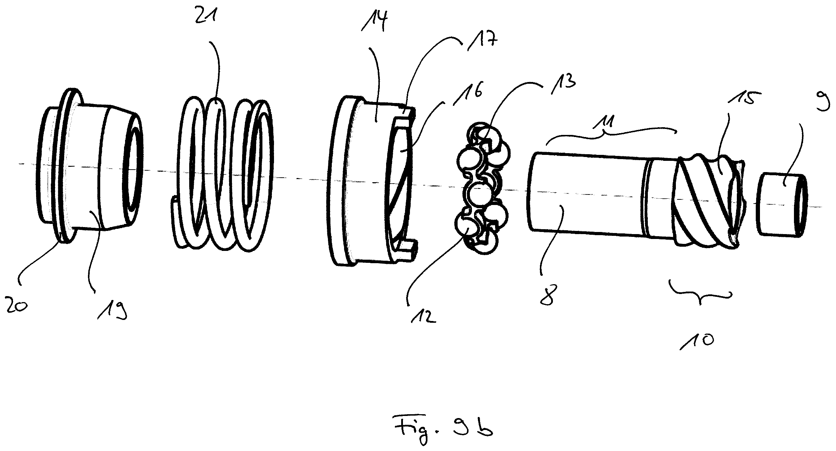

Der Gewindeabschnitt 10 steht über Kugeln 12, die in einem zweireihigen Kugelkäfig 13 gelagert sind, wie die Figur 9b zeigt, mit einer den Gewindeabschnitt 10 radial umgebenden Mutter 14 in Verbindung.

Der Gewindeabschnitt 10 weist entsprechende Rillen 15 und die Mutter 14 entsprechende Rillen 16 auf, zwischen denen die zweireihig angeordneten Kugeln 12 geführt sind.

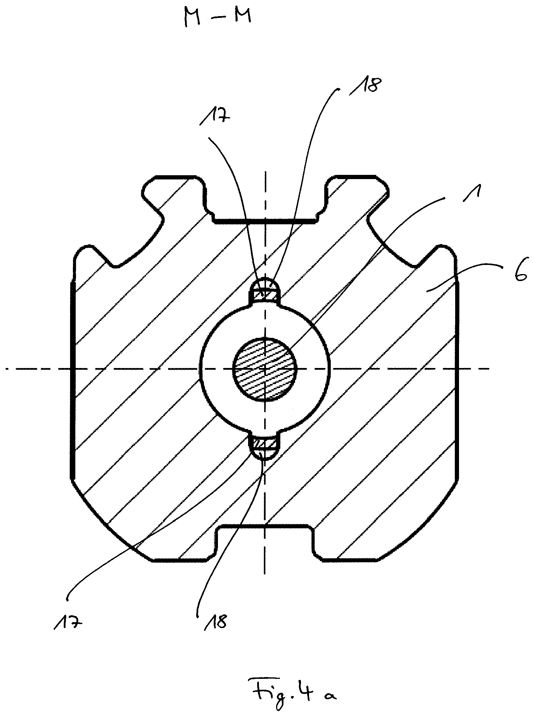

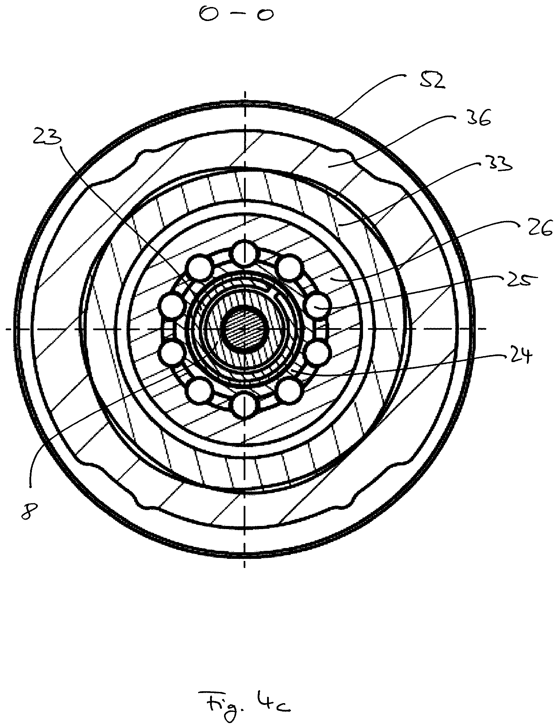

Die Mutter 14 bildet das Antriebselement des Kugelgewindetriebs 7 und ist mit dem Lagersitzkörper 6 verdrehsicher verbunden, indem stirnseitig an der Mutter 14 vorgesehene, sich in Axialrichtung erstreckende Vorsprünge 17 in entsprechende Ausnehmungen 18 des Lagersitzkörpers 6 eingreifen, wie am besten die Schnittdarstellung der Figur 4a zeigt.

Dadurch wird bewirkt, dass bei Einleitung der Zuspannkraft eine Translationsbewegung des Lagersitzkörpers 6 und damit der Mutter 14 auf Grund der Kinematik des Kugelgewindetriebs 7 in einer Drehbewegung der Hohlspindel 8 auf dem Stab 1 resultiert.

Gemäß der Erfindung bildet die Hohlspindel 8 als Abtriebselement des Kugelgewindetriebs 7 gleichzeitig das Eingangselement für die Nachstelleinrichtung B, wie im Folgenden erläutert wird.

Auf der Hohlspindel 8 ist im Bereich des Zylinderabschnitts 11 eine Kupplungshülse 19 angeordnet, die mit der Hohlspindel 8 über eine Presspassung drehfest verbunden ist.

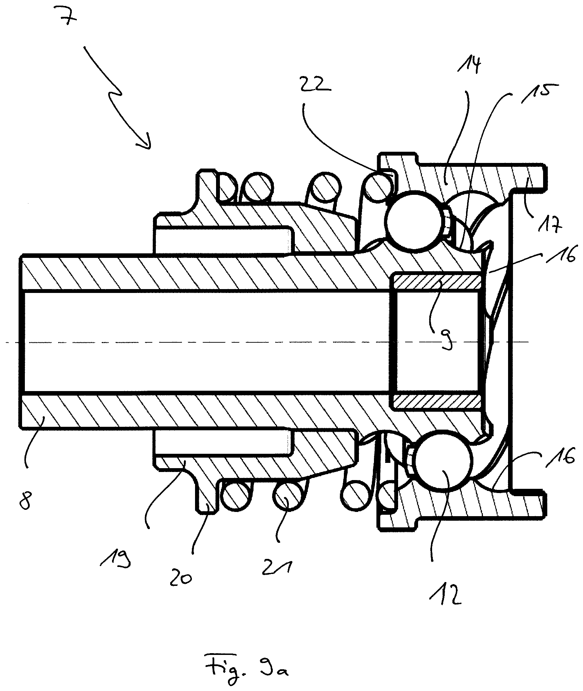

Die Kupplungshülse 19 weist einen umlaufenden Flanschring 20 auf, an dem sich eine Feder 21 abstützt, die auf der gegenüberliegenden Seite in einer stirnseitigen Ausnehmung 22 der Mutter 14 aufgenommen ist, so dass die Feder nicht radial auswandern kann, wie die Figur 9a zeigt.

Die Feder 21 ist in der Lage, die Zapfen 17 in Eingriff mit den Ausnehmungen 18 zu halten.

Die Kupplungshülse 19 ist über eine erste Freilauffeder 23 mit einer Radiallagernabe 24 gekoppelt. Die Kupplungshülse 19 und die Radiallagernabe 24 schließen die erste Freilauffeder radial ein und bilden so eine erste Momentenkupplung M1 aus.

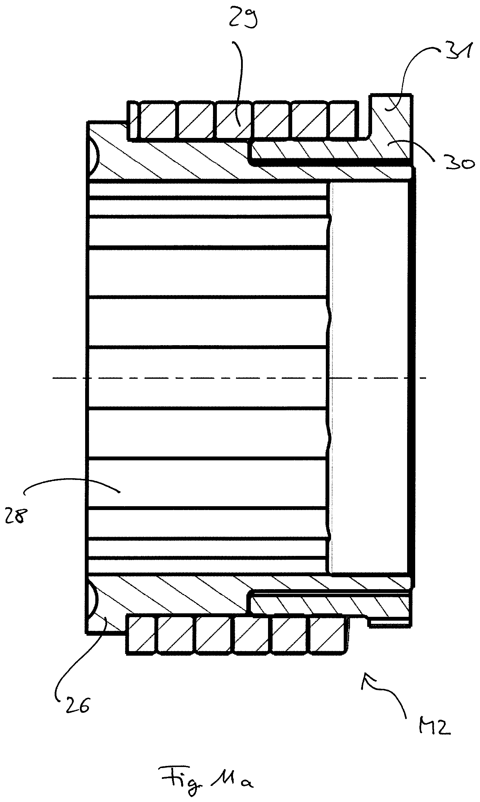

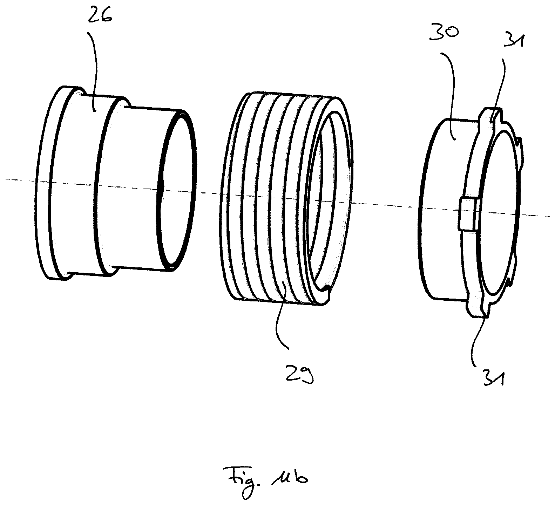

Die Radiallagernabe 24 steht über ein Radiallager 25 mit einer vorderen Momentenhülse 26 in einer drehmomentübertragenden Verbindung. Die Radiallagernabe 24 weist Längsrillen 27 und die vordere Momentenhülse 26 weist entsprechende Längsrillen 28 auf (s. Figur 11a), zwischen denen die Kugeln des Radiallagers 25 gelagert sind, so dass eine Drehmomentübertragung bei gleichzeitiger axialer Verschiebbarkeit zwischen diesen Elementen zur Verfügung gestellt wird.

Unter Ausbildung einer zweiten Momentenkupplung M2 ist die vordere Momentenhülse 26 über eine zweite Freilauffeder 29 mit einer hinteren Momentenhülse 30 verbunden.

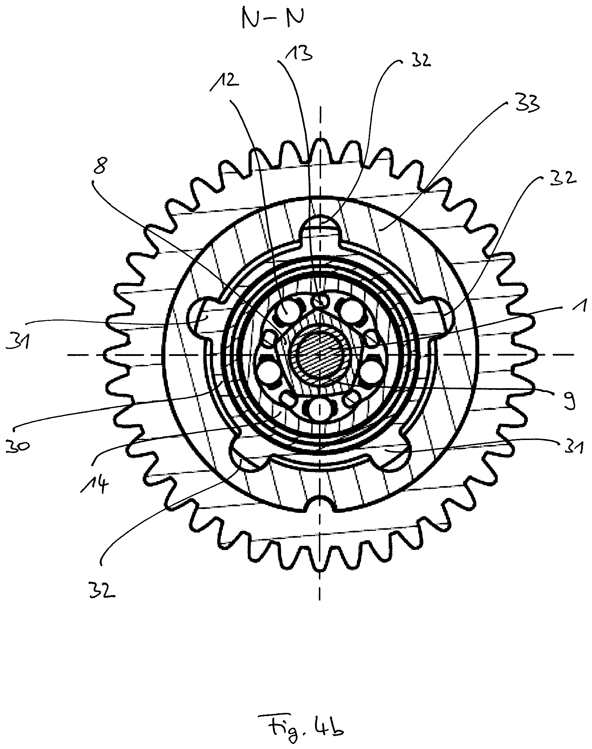

Die hintere Momentenhülse 30 weist radiale Vorsprünge 31 auf, die in entsprechende Ausnehmungen 32 (s. Figur 4b) einer Nachstellspindel 33 eingreifen. Die Nachstellspindel 33 umschließt die weiteren Komponenten der Nachstelleinrichtung B vollständig und weist außenseitig ein Gewinde 34 auf, das mit einem Innengewinde 35 eines topfartigen Druckstücks 36 des Druckelements C in einem Gewindeeingriff steht. An der Vorderseite wirkt das Druckstücks 36 mit einem (hier nicht dargestellten) Bremsbelaghalter zusammen, um die Zuspannkraft auf die Bremsscheibe zu übertragen.

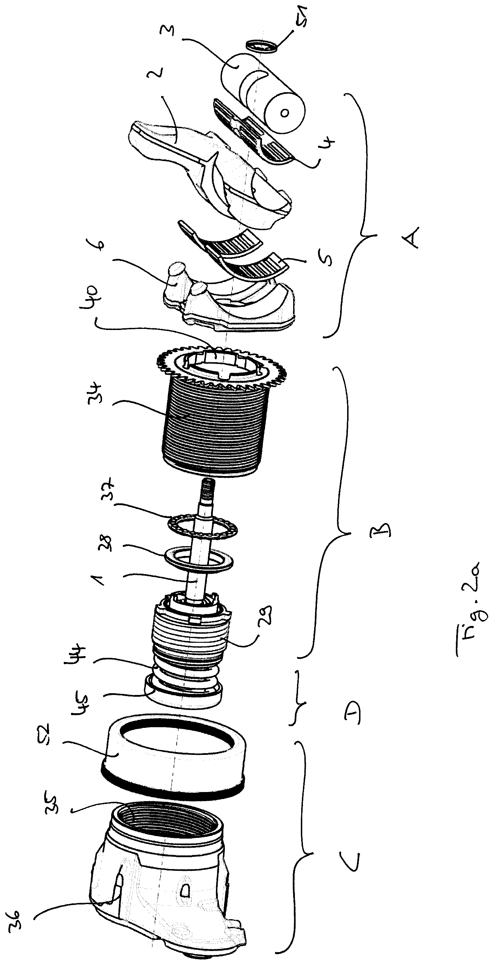

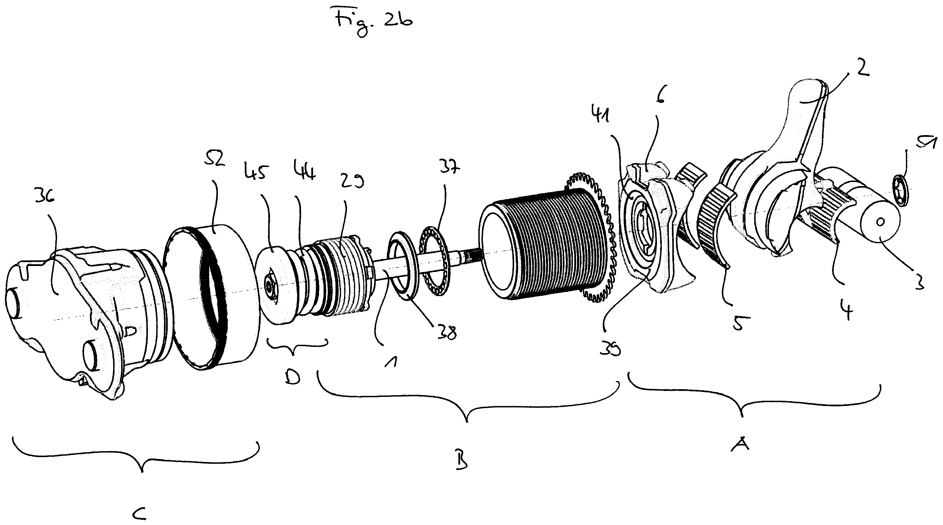

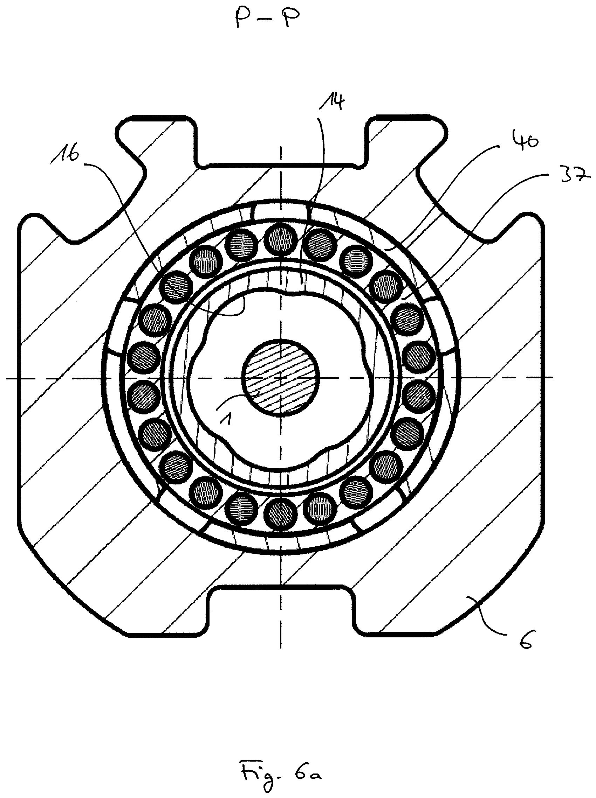

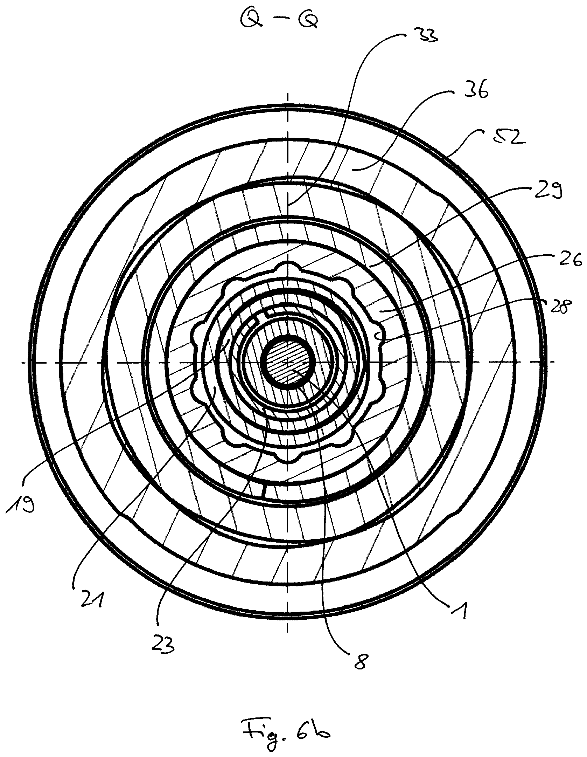

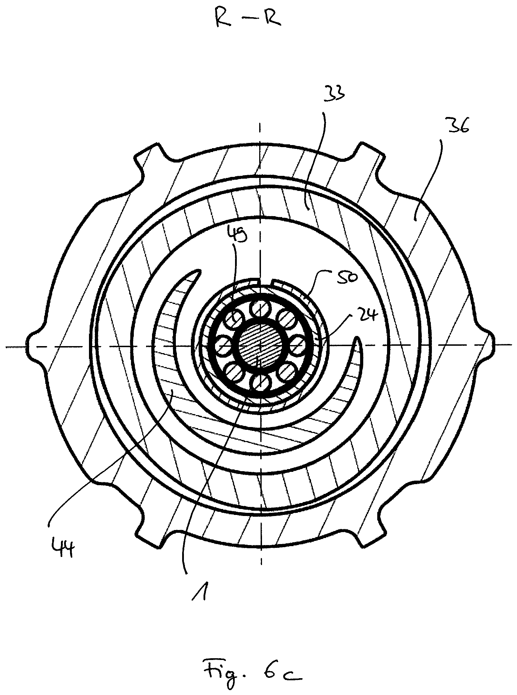

Wie die Schnittdarstellung der Figur 6a zeigt, stützt sich die hintere Momentenhülse 30 über ein friktionsarmes Radiallager 37 unter Zwischenschaltung eines Zwischenrings 38 an dem Lagersitzkörper 6 ab. Der Lagersitzkörper 6 wiederum steht mit der Nachstellspindel 33 über eine Lagerfläche 39 unmittelbar in Kontakt (s. Figur 2b), wobei radial abschnittsweise umlaufende, axiale Vorsprünge 40 (s. Figur 2a) der Nachstellspindel 33 in eine Ringausnehmung 41 des Lagersitzkörpers 6 eingreifen. Hierdurch wird erreicht, dass der Hauptkraftfluss der Zuspannkraft von dem Lagersitzkörper 6 direkt in die Nachstellspindel 33 und über den Gewindeeingriff 34, 35 auf das Druckstück 36 erfolgt, während auf Grund des friktionsarmen Radiallagers 37 die hintere Momentenhülse 30 und damit die Nachstelleinrichtung B insgesamt weitestgehend von der Zuspannkraft in axialer Richtung entkoppelt bleibt.

An der dem Radiallager 37 gegenüberliegenden Seite ist an der vorderen Momentenhülse 26 ein Gleitlagerring 42 vorgesehen, der gegenüber einem Haltering 43 geführt ist.

An dem Haltering 43 kommt eine Feder 44 der Rückstelleinrichtung D zur Anlage. Die als Schraubenfeder konzipierte Rückstellfeder 44 wiederum stützt sich an einer Widerlagerschale 45 ab, die an dem bremsscheibenzugewandten Ende des Stabs 1 mittels einer Befestigungsmutter 46 befestigt ist.

Die Widerlagerschale 45 wird hierbei zwischen einem Widerlagerring 47 und der Befestigungsmutter 46 eingespannt.

Die Hohlspindel 8 wiederum ist an dem Widerlagerring 47 über einen Haltering 48 und ein Axiallager 49 in einer drehbaren Lagerung abgestützt, die die auf die Hohlspindel 8 axial einwirkenden Kräfte aufnehmen.

Unter Ausbildung einer dritten Momentenkupplung M3 ist der Widerlagerring 47 über eine dritte Freilauffeder 50 mit der Radiallagernabe 24 gekoppelt, die diese Komponenten radial außenseitig einschließt.

Wie aus der Figur 1 zu ersehen ist, wird der gesamte Bremsbetätigungsmechanismus bremsscheibenseitig durch die Befestigungsmutter 46 und bremsscheibenabgewandt durch einen Befestigungsring 51 auf dem Stab 1 gehalten, indem der Verstärkungsmechanismus A, die Nachstelleinrichtung B, das Druckelement C und die Rückstelleinrichtung D funktional zusammenwirkend angeordnet werden, wobei die hohle Nachstellspindel 33 die übrigen Komponenten der Nachstelleinrichtung B und die Rückstelleinrichtung D vollständig aufnimmt. Der Bremsbetätigungsmechanismus kann mittels des Stabs 1 als Einheit in einem Gehäuse des Bremssattels montiert und befestigt werden. Zur Abdichtung gegenüber dem Gehäuse des Bremssattels ist eine sich mit Translationsbewegung des Druckelements C axial abrollende Dichtmanschette 52 zwischen dem Druckstück 36 und der Innenwand eines Gehäuses des Bremssattels vorgesehen.

Während einer Bremsbetätigung, wenn eine Translationsbewegung des Lagersitzkörpers 6 die Hohlspindel 8 über den Kugelgewindetrieb 7 in Drehung versetzt, sperrt die erste Freilauffeder 23 der ersten Momentenkupplung M1 die Kupplungshülse 19 mit der Radiallagernabe 24. Über das Radiallager 25 wird dann die Drehung entsprechend auf die vordere Momentenhülse 26 übertragen.

Die entsprechend groß dimensionierte zweite Freilauffeder 29 der zweiten Momentenkupplung M2 rutscht während des Betätigungshubs in Abhängigkeit des hierdurch definierten Drehmoments durch und begrenzt dadurch das Drehmoment gegenüber der hinteren Momentenhülse 30, die mit der Nachstellspindel 33 drehfest gekoppelt ist.

Die Drehung der vorderen Momentenhülse 30 bewirkt, dass sich die Rückstellfeder 44 über den Gleitlagerring 42 und den Haltering 43 aufwickelt, d.h. in sich verdreht, und komprimiert wird, da der Reibungseingriff zwischen der Rückstellfeder 44 und dem Haltering 43 groß genug ist, um ein Durchrutschen zwischen dem Ende der Rückstellfeder 44 und dem Haltering 43 zu vermeiden. Der Grad der Aufwicklung bzw. Kompression wird durch die vordere Momentenhülse 30 begrenzt und bestimmt sich durch die Reibung im Gleitlagerring 42 zwischen dem Haltering 43 und der vorderen Momentenhülse 26.

Während der Bremsfreigabe, d.h. wenn keine Zuspannkraft mehr übertragen wird, bewirkt die Feder 21, dass die Mutter 14 der Rückwärtsbewegung des Lagersitzkörpers 6 folgt. Hierbei wird die Hohlspindel 8 in ihre ursprüngliche Lage zurückgedreht.

Des Weiteren wird die Rückstellfeder 44 wieder entwickelt bzw. streckt sich, wodurch über den Haltering 43 und den Gleitlagerring 42 die vordere Momentenhülse 26 in entgegengesetzter Drehrichtung in Drehung versetzt wird. In dieser Drehrichtung koppelt die zweite, entsprechend groß dimensionierte Freilauffeder 29 die vordere Momentenhülse 26 mit der hinteren Momentenhülse 30.

Das Ausmaß dieser Drehung wird jedoch begrenzt, indem die dritte Freilauffeder 50 der dritten Momentenkupplung M3 die Drehung der Radiallagernabe 24 sozusagen abbremst, d.h. das Ausmaß der Umdrehung der Radiallagernabe 24 gemäß des nachzustellenden Maßes limitiert. Diese limitierte Umdrehung bzw. limitierten Umdrehungen wird/werden über das Radiallager 25 dann auf die vordere Momentenhülse 26 und damit dann auf die hintere Momentenhülse 30 übertragen, da in dieser Drehrichtung die beiden Momentenhülsen 26 und 30 über die zweite Freilauffeder 29 gekoppelt sind. Die Rückstellfeder 44 hört auf, sich aufzuwickeln bzw. sich zu strecken, sobald die dritte Freilauffeder 50 sperrt. Die dritte Freilauffeder 50 setzt der Kopplung durch die zweite Freilauffeder 29 quasi einen definierten Widerstand entgegen, der das nachzustellende Maß bei jedem Bremshub bestimmt. Abschließend wird diese, mit Widerstand von der dritten Freilauffeder 50 behaftete Drehung von der hinteren Momentenhülse 30 über die drehfeste Kopplung auf die Nachstellspindel 33 übertragen, was auf Grund der verdrehsicheren Führung des Druckstücks 36 und des Gewindeeingriffs 34, 35 zu einer entsprechenden Nachstellung des Lüftspiels führt, d.h. bei Rückstellung des Bremsbetätigungsmechanismus bewegt sich das Druckstück 36 gemäß der durch die Nachstellspindel 33 durchgeführten Drehung gegenüber der Nachstellspindel 33 in Richtung auf die Bremsscheibe nach vorne, während beide Elemente sich tatsächlich gegenüber dem Gehäuse des Bremssattels in einer Rückwärtsbewegung befinden.

Auf das Lüftspiel nehmen in quantitativer Hinsicht alle Toleranzen bzw. Spiele Einfluss, die sich über die Komponenten des Bremsbetätigungsmechanismus verteilt finden, die während eines Betätigungshubs, also wenn der Hebel 2 den Lagersitzkörper 6 nach vorne zur Bremsscheibe drückt, im Rahmen der Nachstellung innerhalb des Kraftflusses liegen. Dies umfasst ein sehr kleines, üblicherweise den für eine Montage vorgesehenen Toleranzen entsprechendes Winkelspiel zwischen dem Lagersitzkörper 6 und der Mutter 14, ein Spiel zwischen der Mutter 14, den Kugeln 12 und der Hohlspindel 8, eine Drehbeweglichkeit der ersten Freilauffeder 23 zwischen der drehfest mit der Hohlspindel 8 verbundenen Kupplungshülse 19 und der über diese erste Freilauffeder 23 dann antreibbaren Radiallagernabe 24, ein Spiel zwischen dieser Radiallagernabe 24, den Kugeln des Radiallagers 25 und der vorderen Momentenhülse 26, eine Drehbeweglichkeit der zweiten Freilauffeder 29 zwischen der vorderen Momentenhülse 26 und der hinteren Momentenhülse 30, ein Winkelspiel zwischen den radialen Vorsprüngen 31 der hinteren Momentenhülse 30 und den Ausnehmungen 32 der Nachstellspindel 33 sowie ein Spiel im Gewinde zwischen der Nachstellspindel 33 und dem Druckstück 36. Durch eine gezielte Dimensionierung der vorhergehend genannten Komponenten und damit der einzelnen Spiele, Toleranzen und Drehbeweglichkeiten lässt sich in konstruktiver Hinsicht das erforderliche Lüftspiel, das von dem erfindungsgemäßen Bremsbetätigungsmechanismus dann einzustellen ist, festlegen.

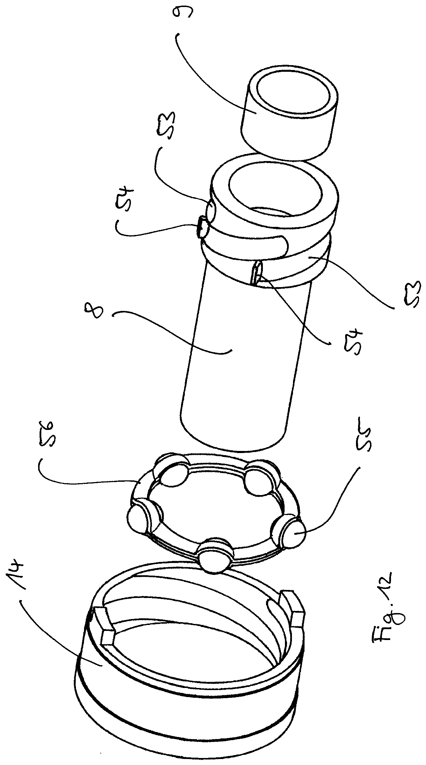

In der Figur 12 ist eine alternative Ausführungsform einer Hohlspindel 8 gezeigt.

Diese Hohlspindel 8 weist im Bereich ihres Gewindeabschnitts 10 mehrere Rillen 53 auf, die sich jeweils nur über einen Teilumfang der Hohlspindel 8 erstrecken und gegenseitig über einen gewissen Umfang überlappen. Die Enden der Rillen 53 sind mit Anschlägen 54 versehen, gegen die die Kugeln 55, die in einem einreihigen Kugelkäfig 56 angeordnet sind, auflaufen. Hierdurch wird der Umfangsweg der Kugeln 55 und damit das Maß der möglichen Drehung der Hohlspindel 8 begrenzt. Durch eine gezielte Auswahl des Ausmaßes der Überlappung sowie der Umfangserstreckung der Rillen 53 kann das Drehverhalten der Hohlspindel 8 in Abstimmung mit den übrigen konstruktiven Vorgaben der Nachstelleinrichtung B und dadurch deren Nachstellverhalten gezielt festgelegt werden.

**Bezugszeichenliste**

| | | | |
|---|---|---|---|
| A | Verstärkungsmechanismus | M1 | erste Momentenkupplung |
| B | Nachstelleinrichtung | M2 | zweite Momentenkupplung |
| C | Druckelement | M3 | dritte Momentenkupplung |
| D | Rückstelleinrichtung | | |

- 1: Stab
- 2: Hebel
- 3: Walze
- 4: Nadellagerkäfige
- 5: Nadellagerkäfige
- 6: Lagersitzkörper
- 7: Kugelgewindetrieb
- 8: Hohlspindel
- 9: Gleitlagerbuchse
- 10: Gewindeabschnitt
- 11: Zylinderabschnitt
- 12: Kugeln
- 13: Kugelkäfig
- 14: Mutter
- 15: Rillen
- 16: Rillen
- 17: Vorsprünge/Zapfen
- 18: Ausnehmungen
- 19: Kupplungshülse
- 20: Flanschring
- 21: Feder
- 22: Ausnehmung
- 23: erste Freilauffeder
- 24: Radiallagernabe
- 25: Radiallager/Kugeln
- 26: vordere Momentenhülse
- 27: Längsrillen
- 28: Längsrillen
- 29: zweite Freilauffeder
- 30: hintere Momentenhülse
- 31: radiale Vorsprünge
- 32: Ausnehmungen
- 33: Nachstellspindel
- 34: Gewinde
- 35: Innengewinde
- 36: topfartiges Druckstück
- 37: friktionsarmes Radiallager
- 38: Zwischenring
- 39: Lagerfläche
- 40: axiale Vorsprünge
- 41: Ringausnehmung
- 42: Gleitlagerring
- 43: Haltering
- 44: Rückstellfeder
- 45: Widerlagerschale
- 46: Befestigungsmutter
- 47: Widerlagerring
- 48: Haltering
- 49: Axiallager
- 50: dritte Freilauffeder
- 51: Befestigungsring
- 52: Dichtmanschette
- 53: Rillen
- 54: Anschläge
- 55: Kugeln
- 56: Kugelkäfig

## Patentansprüche

1. Bremsbetätigungsmechanismus für eine Scheibenbremse mit
- einem Verstärkungsmechanismus (A) zur Einleitung einer Zuspannkraft für den Bremsvorgang,
- einem Druckelement (C) zur Übertragung der Zuspannkraft auf eine Bremsscheibe,
wobei der Verstärkungsmechanismus (A) und das Druckelement (C) so zusammenwirken, dass das Druckelement (C) durch eine Verlagerungsbewegung des Verstärkungsmechanismus (A) eine Translationsbewegung in Richtung auf die Bremsscheibe ausführt,
- und einer Nachstelleinrichtung (B) zum Ausgleich eines Belagverschleißes,
wobei ein Eingangselement der Nachstelleinrichtung (B) durch diese Translationsbewegung in Drehung versetzbar ist,
**dadurch gekennzeichnet, dass**
das Eingangselement der Nachstelleinrichtung (B) als Teil eines Kugelgewindetriebs (7) ausgebildet ist.

2. Bremsbetätigungsmechanismus nach Anspruch 1, bei dem das Eingangselement der Nachstelleinrichtung (B) mittelbar oder unmittelbar mit einer Momentenkupplung (M1) zusammenwirkt.

3. Bremsbetätigungsmechanismus nach Anspruch 1 oder 2, bei dem das Eingangselement der Nachstelleinrichtung als Spindel (8) oder als Mutter (14) eines Kugelgewindetriebs (7) ausgebildet ist.

4. Bremsbetätigungsmechanismus nach Anspruch 1, 2 oder 3, bei dem der Verstärkungsmechanismus (A), das Druckelement (C) und die Nachstelleinrichtung (B) mittels eines in einem Gehäuse eines Bremssattels der Scheibenbremse in Axialrichtung unbeweglich und nicht drehbar gelagerten Stabs (1) funktional zusammenwirkend in dem Bremssattel montierbar sind,
wobei das Eingangselement der Nachstelleinrichtung (B) als eine auf dem Stab (1) drehbar gelagerte Hohlspindel (8) eines Kugelgewindetriebs (7) ausgebildet ist.

5. Bremsbetätigungsmechanismus nach Anspruch 4, bei dem eine Mutter (14) des Kugelgewindetriebs (7) von dem Verstärkungsmechanismus (A) axial mit Druck beaufschlagbar ist.

6. Bremsbetätigungsmechanismus nach Anspruch 5, bei dem der Verstärkungsmechanismus (A) einen Hebel (2) aufweist, der in einem Lagersitzkörper (6) schwenkbar gelagert ist und die Mutter (14) des Kugelgewindetriebs (7) mit dem Lagersitzkörper (6) in einer verdrehsicheren Verbindung steht.

7. Bremsbetätigungsmechanismus nach Anspruch 5 oder 6, bei dem die Hohlspindel (8) des Kugelgewindetriebs (7) einen Gewindeabschnitt (10), der über Kugeln (12) mit der Mutter (14) des Kugelgewindetriebs (7) in einer drehbaren Verbindung steht, und einen Zylinderabschnitt (11) aufweist.

8. Bremsbetätigungsmechanismus nach Anspruch 7, bei dem der Zylinderabschnitt (11) mit einer diesen Zylinderabschnitt (11) radial umgebenden Kupplungshülse (19) in einer drehfesten Verbindung steht, und
bei dem zwischen der Mutter (14) des Kugelgewindetriebs (7) und der Kupplungshülse (19) eine Feder (21) angeordnet ist, die sich über einen definierten axialen Abstand erstreckt.

9. Bremsbetätigungsmechanismus nach Anspruch 8, bei dem die Kupplungshülse (19) mit einer Radiallagernabe (24) über eine erste Freilauffeder (23) unter Ausbildung einer ersten Momentenkupplung (M1) gekoppelt ist.

10. Bremsbetätigungsmechanismus nach Anspruch 9, bei dem die Radiallagernabe (24) über ein Radialkugellager (25) mit einer vorderen Momentenhülse (26) in einer drehfesten, aber axial verschiebbaren Verbindung steht, und
bei dem die vordere Momentenhülse (26) mit einer hinteren Momentenhülse (30) über eine zweite Freilauffeder (29) unter Ausbildung einer zweiten Momentenkupplung (M2) gekoppelt ist.

11. Bremsbetätigungsmechanismus nach Anspruch 10, bei dem die hintere Momentenhülse (30) mit einer die Momentenhülse (30) radial umgebenden Nachstellspindel (33) der Nachstelleinrichtung (B) in einer drehfesten Verbindung steht.

12. Bremsbetätigungsmechanismus nach Anspruch 11, bei dem die Nachstellspindel (33) mit einem drehfest gelagerten Druckstück (36) des Druckelements (C) in einem Gewindeeingriff (34,35) steht.

13. Bremsbetätigungsmechanismus nach Anspruch 9, bei dem die Radiallagernabe (24) mit einem Widerlagerring (47) über eine dritte Freilauffeder (50) unter Ausbildung einer dritten Momentenkupplung (M3) gekoppelt ist.

14. Bremsbetätigungsmechanismus nach einem der Ansprüche 7 bis 13, bei dem zwischen der Mutter (14) und dem Gewindeabschnitt (10) des Kugelgewindetriebs (7) Kugeln (12) oder Kugelkäfige (13;56) in einer Reihe oder mehreren Reihen angeordnet sind.

15. Bremsbetätigungsmechanismus nach einem der Ansprüche 7 bis 14, bei dem die Anzahl, die Steigungswinkel und/oder die Umfangserstreckung der Rillen (16) der Mutter (14) und/oder der Rillen (15;53) des Gewindeabschnitts (10) unterschiedlich ausgestaltet sind.

16. Bremsbetätigungsmechanismus nach einem der Ansprüche 7 bis 15, bei dem die Rillen (16) der Mutter (14) und/oder die Rillen (15;53) des Gewindeabschnitts (10) eine variierende Steigung aufweisen.

17. Bremsbetätigungsmechanismus nach einem der Ansprüche 7 bis 16, bei dem die Rillen (16) der Mutter (14) und die Rillen (15;53) des Gewindeabschnitts (10) derart ausgestaltet sind, dass eine erste Nachstellung bei geringen Drehgeschwindigkeiten der Hohlspindel (8) und eine weitere, darüber hinausgehende Nachstellung bei höheren Drehgeschwindigkeiten der Hohlspindel (8) durch die Nachstelleinrichtung (B) bewerkstelligt wird.

18. Scheibenbremse aufweisend einen Bremsbetätigungsmechanismus nach zumindest einem der Ansprüche 1 bis 17.

## Claims

1. Brake actuation mechanism for a disc brake having
- an amplification mechanism (A) for introducing a clamping force for the braking operation,
- a thrust element (C) for transmitting the clamping force to a brake disc,
the amplification mechanism (A) and the thrust element (C) cooperating such that the thrust element (C) performs a translational movement in the direction of the brake disc by a displacement movement of the amplification mechanism (A),
- and an adjustment device (B) for compensating wear of the lining,
wherein an input element of the adjustment device (B) can be set in rotation by said translational movement,
**characterized in that**
the input element of the adjustment device (B) is formed as part of a ball screw drive (7).

2. Brake actuation mechanism according to claim 1, in which the input element of the adjustment device (B) interacts directly or indirectly with a torque clutch (M1).

3. Brake actuation mechanism according to claim 1 or 2, in which the input element of the adjustment device is designed as a spindle (8) or as a nut (14) of a ball screw drive (7).

4. Brake actuation mechanism according to claim 1, 2 or 3, in which the amplification mechanism (A), the thrust element (C) and the adjustment device (B) can be mounted together in a brake caliper by means of a rod (1) in a functionally cooperating manner, which rod (1) is mounted in a housing of the brake caliper of the disc brake so as to be immovable in the axial direction and not rotatable,
the input element of the adjustment device (B) being in the form of a hollow spindle (8) of a ball screw drive (7) which is mounted rotatably on the rod (1).

5. Brake actuation mechanism according to claim 4, in which a nut (14) of the ball screw drive (7) is axially applied with pressure by the amplification mechanism (A).

6. Brake actuating mechanism according to claim 5, in which the amplification mechanism (A) comprises a lever (2) which is pivotably mounted in a bearing seat body (6) and the nut (14) of the ball screw drive (7) is in a non-rotating connection with the bearing seat body (6).

7. Brake actuating mechanism according to claim 5 or 6, in which the hollow spindle (8) of the ball screw drive (7) has a threaded section (10) which is rotatably connected to the nut (14) of the ball screw drive (7) via balls (12), and a cylindrical portion (11).

8. Brake actuating mechanism according to claim 7, in which the cylindrical section (11) is in a rotationally fixed connection with a coupling sleeve (19) radially surrounding said cylindrical section (11), and in which a spring (21) is arranged between the nut (14) of the ball screw drive (7) and the coupling sleeve (19) and extends over a defined axial distance.

9. Brake actuation mechanism according to claim 8, in which the coupling sleeve (19) is coupled to a radial bearing hub (24) via a first freewheeling spring (23) to form a first torque clutch (M1).

10. Brake actuation mechanism according to claim 9, in which the radial bearing hub (24) is connected via a radial ball bearing (25) to a front torque sleeve (26) in a rotationally fixed but axially displaceable manner, and in which the front torque sleeve (26) is coupled to a rear torque sleeve (30) via a second freewheeling spring (29) to form a second torque clutch (M2).

11. Brake actuation mechanism according to claim 10, in which the rear torque sleeve (30) is in a rotationally fixed connection with an adjusting spindle (33) of the adjustment device (B) radially surrounding the torque sleeve (30).

12. Brake actuation mechanism according to claim 11, in which the adjusting spindle (33) is in threaded engagement (34,35) with a thrust piece (36) of the thrust element (C), which thrust piece (36) is mounted in a rotationally fixed manner.

13. Brake actuation mechanism according to claim 9, in which the radial bearing hub (24) is coupled to the abutment ring (47) via a third freewheeling spring (50) to form a third torque clutch (M3).

14. Brake actuating mechanism according to any of claims 7 to 13, in which balls (12) or ball cages (13;56) are arranged in one or more rows between the nut (14) and the threaded section (10) of the ball screw drive (7).

15. Brake actuation mechanism according to any of claims 7 to 14, in which the number, pitch angles and/or circumferential extent of the grooves (16) of the nut (14) and/or the grooves (15;53) of the threaded section (10) are of different configuration.

16. Brake actuation mechanism according to any of claims 7 to 15, in which the grooves (16) of the nut (14) and/or the grooves (15;53) of the threaded section (10) have a varying pitch.

17. Brake actuation mechanism according to any of claims 7 to 16, in which the grooves (16) of the nut (14) and the grooves (15;53) of the threaded section (10) are configured such that a first adjustment at low rotational speeds of the hollow spindle (8) and a further adjustment beyond that at higher rotational speeds of the hollow spindle (8) is effected by the adjustment device (B).

18. Disc brake comprising a brake actuation mechanism according to at least one of claims 1 to 17.

## Revendications

1. Mécanisme de commande de frein pour un frein à disque, comprenant:
- un mécanisme d'amplification (A) pour l'introduction d'une force de serrage pour l'opération de serrage du frein,
- un élément de pression (C) pour la transmission de la force de serrage à un disque de frein,
dans lequel le mécanisme d'amplification (A) et l'élément de pression (C) coopèrent de telle manière que l'élément de pression (C) effectue, par un mouvement de déplacement du mécanisme d'amplification (A), un mouvement de translation en direction du disque de frein, et
- un dispositif de rattrapage (B) pour compenser une usure de la garniture,
dans lequel un élément d'entrée du dispositif de rattrapage (B) peut être mis en rotation par ce mouvement de translation,
**caractérisé en ce que**
l'élément d'entrée du dispositif de rattrapage (B) est réalisé sous la forme d'une partie d'une vis d'entraînement à billes (7).

2. Mécanisme de commande de frein selon la revendication 1, dans lequel l'élément d'entrée du dispositif de rattrapage (B) coopère indirectement ou directement avec un accouplement instantané (M1).

3. Mécanisme de commande de frein selon la revendication 1 ou 2, dans lequel l'élément d'entrée du dispositif de rattrapage est réalisé sous la forme d'une broche (8) ou sous la forme d'un écrou (14) d'une vis d'entraînement à billes (7).

4. Mécanisme de commande de frein selon la revendication 1, 2, ou 3, dans lequel le mécanisme d'amplification (A), l'élément de pression (C) et le dispositif de rattrapage (B) peuvent être montés en coopération fonctionnelle dans l'étrier de frein au moyen d'une barre (1) qui est agencée de façon calée en déplacement en direction axiale et en rotation dans un boîtier d'un étrier de frein du frein à disque,
dans lequel l'élément d'entrée du dispositif de rattrapage (B) est réalisé sous la forme d'une broche creuse (8) d'une vis d'entraînement à billes (7) qui est agencée de façon rotative sur la barre (1).

5. Mécanisme de commande de frein selon la revendication 4, dans lequel un écrou (14) de la vis d'entraînement à billes (7) peut être soumis axialement à la pression par le mécanisme d'amplification (A).

6. Mécanisme de commande de frein selon la revendication 5, dans lequel le mécanisme d'amplification (A) présente un levier (2), qui est appuyé de façon pivotante dans un corps de siège de palier (6) et l'écrou (14) de la vis d'entraînement à billes (7) se trouve en relation de rotation sûre avec le corps de siège de palier (6).

7. Mécanisme de commande de frein selon la revendication 5 ou 6, dans lequel la broche creuse (8) de la vis d'entraînement à billes (7) présente une partie filetée (10), qui se trouve à l'aide de billes (12) dans un assemblage rotatif avec l'écrou (14) de la vis d'entraînement à billes (7), et une partie cylindrique (11).

8. Mécanisme de commande de frein selon la revendication 7, dans lequel la partie cylindrique (11) se trouve dans un assemblage calé en rotation avec une douille d'accouplement (19) qui entoure radialement cette partie cylindrique (11), et dans lequel un ressort (21) est disposé entre l'écrou (14) de la vis d'entraînement à billes (7) et la douille d'accouplement (19), et qui s'étend sur une distance axiale définie.

9. Mécanisme de commande de frein selon la revendication 8, dans lequel la douille d'accouplement (19) est couplée à un moyeu de palier radial (24) par un premier ressort de roue libre (23) avec formation d'un premier accouplement instantané (M1).

10. Mécanisme de commande de frein selon la revendication 9, dans lequel le moyeu de palier radial (24) se trouve dans un assemblage calé en rotation mais déplaçable axialement par un roulement à billes radial (25) avec une douille instantanée antérieure (26), et dans lequel la douille instantanée antérieure (26) est couplée à une douille instantanée postérieure (30) par un deuxième ressort à roue libre (29) avec formation d'un deuxième accouplement instantané (M2).

11. Mécanisme de commande de frein selon la revendication 10, dans lequel la douille instantanée postérieure (30) se trouve dans une relation calée en rotation avec une broche de rattrapage (33) du dispositif de rattrapage (B) qui entoure radialement la douille instantanée (30).

12. Mécanisme de commande de frein selon la revendication 11, dans lequel la broche de rattrapage (33) se trouve dans un engagement fileté (34, 35) avec une pièce de pression (36) de l'élément de pression (C) montée de façon calée en rotation.

13. Mécanisme de commande de frein selon la revendication 9, dans lequel le moyeu de palier radial (24) est couplé à une bague de palier opposé (47) par l'intermédiaire d''un troisième ressort de roue libre (50) avec formation d'un troisième accouplement instantané (M3).

14. Mécanisme de commande de frein selon l'une quelconque des revendications 7 à 13, dans lequel des billes (12) ou des cages de billes (13; 56) sont disposées en une rangée ou en plusieurs rangées entre l'écrou (14) et la partie filetée (10) de la vis d'entraînement à billes (7).

15. Mécanisme de commande de frein selon l'une quelconque des revendications 7 à 14, dans lequel le nombre, l'angle de pente et/ou l'extension périphérique des sillons (16) de l'écrou (14) et/ou des sillons (15; 53) de la partie filetée (10) sont configurés de façon différente.

16. Mécanisme de commande de frein selon l'une quelconque des revendications 7 à 15, dans lequel les sillons (16) de l'écrou (14) et/ou les sillons (15; 53) de la partie filetée (10) présentent une pente variable.

17. Mécanisme de commande de frein selon l'une quelconque des revendications 7 à 16, dans lequel les sillons (16) de l'écrou (14) et les sillons (15; 53) de la partie filetée (10) sont configurés de telle manière qu'un premier rattrapage soit réalisé à de faibles vitesses de rotation de la broche creuse (8) et qu'un autre rattrapage plus marqué soit réalisé à des vitesses de rotation plus élevées de la broche creuse (8) par le dispositif de rattrapage (B).

18. Frein à disque présentant un mécanisme de commande de frein selon au moins une des revendications 1 à 17.
